# EUROPÄISCHE PATENTSCHRIFT

(11) **EP 1 588 601 B1**
(45) Veröffentlichungstag und Bekanntmachung des Hinweises auf die Patenterteilung: **17.09.2008**
(21) Anmeldenummer: 05102890.0
(22) Anmeldetag: 13.04.2005
(51) Int. Cl.: A01D 43/08, A01F 29/12

(54) **Erntemaschine mit einer Austrageinrichtung**
Harvesting machine with a discharging device
Machine de récolte avec un dispositif de décharge

(30) Priorität: 24.04.2004 DE 102004020127
(43) Veröffentlichungstag der Anmeldung: 26.10.2005
(73) Patentinhaber: DEERE & COMPANY, Moline, Illinois 61265-8098 (US)
(72) Erfinder: Hettiger, Marcus, 66115, Saarbrücken (DE); Hammerschmid, Karl, 66916, Dunzweiler (DE)
(74) Vertreter: Holst, Sönke

(56) Entgegenhaltungen:
- EP-A- 1 219 153
- EP-A- 1 250 832
- DE-A1- 3 224 269
- US-A1- 2004 053 653

## Beschreibung

Die Erfindung betrifft eine Erntemaschine mit einer Austrageinrichtung zur Überladung von Erntegut auf ein Transportfahrzeug, mit einem zur Bewegung der Austrageinrichtung um eine horizontale Achse eingerichteten Aktor, durch den die Höhe des Abgabeendes der Austrageinrichtung veränderbar ist.

Feldhäcksler sind landwirtschaftliche Erntemaschinen, die im Erntebetrieb auf einem Feld stehendes Erntegut aufnehmen, häckseln und durch eine Austrageinrichtung, die in der Patentliteratur auch als Auswurfkrümmer, Auswurfbogen oder Überladeeinrichtung bezeichnet wird, auf ein Transportfahrzeug abgeben. Die Position der Austrageinrichtung am Feldhäcksler ist verstellbar, um das Transportfahrzeug möglichst gut treffen und gleichmäßig beladen zu können. Die Austrageinrichtung ist in der Regel um die Hochachse drehbar und um eine horizontale Achse verschwenkbar, um die Höhe des Auswurfendes verstellen zu können. Am Auswurfende ist außerdem eine verschwenkbare Auswurfklappe angebracht, um die Auswurfrichtung des Ernteguts vorgeben zu können. Die genannten Bewegungen werden durch fremdkraftbetätigte Aktoren bewerkstelligt, bei denen es sich in der Regel um Hydraulikzylinder handelt.

Zur Transportfahrt auf einer Straße ist es gebräuchlich, die Austrageinrichtung in eine Transportposition zu verbringen, in der sie sich von ihrem Drehlager nach hinten erstreckt und in ihrem rückwärtigen Bereich auf einer Ablageeinrichtung aufliegt (s. DE 44 03 893 A, DE 101 19 279 A und DE 102 42 164 A).

Falls derartige Erntemaschinen auf einem Lastwagen, Eisenbahnanhänger, Schiff oder dergleichen zu transportieren sind, stellt die Austrageinrichtung, auch wenn sie in ihre Transportstellung verbracht wurde, in der Regel den höchsten Punkt der Erntemaschine dar. Um die zur Teilnahme am Straßenverkehr zulässigen Abmessungen nicht zu überschreiten, könnte man die Austrageinrichtung abnehmen, was aber sehr aufwändig ist. Es ist auch bekannt, so genannte Transportlaschen zu verwenden, um die Austrageinrichtung in eine gegenüber der Transportstellung abgesenkte Verladeposition zu verbringen. Deren Anbringung und Demontage ist jedoch relativ zeitaufwändig und fehleranfällig. Man könnte auch den Bewegungsbereich der Austrageinrichtung nach unten hin erweitern. Das hat aber zum Nachteil, dass ein Bediener beim Erntebetrieb versehentlich ungeeignete Stellungen der Austrageinrichtung ansteuern kann.

Das der Erfindung zu Grunde liegende Problem wird darin gesehen, die genannten Probleme zu vermeiden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird ein Anschlagelement vorgeschlagen, das in einer aktiven Stellung den Bewegungsbereich der Austrageinrichtung nach unten begrenzt, so dass ihr Abgabeende nicht tiefer als in eine tiefste Stellung verstellt werden kann. Das Anschlagelement kann in eine inaktive Stellung verbracht werden, in der das Abgabeende der Austrageinrichtung noch tiefer als die genannte tiefste Stellung bewegt werden kann.

Auf diese Weise erreicht man, dass die Austrageinrichtung im Erntebetrieb - bei aktiviertem Anschlagelement - zwischen einer höchsten Stellung und der tiefsten Stellung bewegt werden kann. Der Bewegungsbereich des Aktors ist derart groß gewählt, so dass die Austrageinrichtung - bei inaktivem Anschlagelement - durch den Aktor für den Transport auf einem Lastwagen, Anhänger oder dgl. in eine noch tiefere Verladeposition abgesenkt werden kann. Hierbei befindet sie sich vorzugsweise seitlich unmittelbar neben einer Ablageeinrichtung an der Rückseite der Erntemaschine und in einer Höhe unterhalb der Ablagefläche der Ablageeinrichtung für die Austrageinrichtung. Dadurch erübrigen sich beim Verladetransport zusätzliche Arbeiten an der Austrageinrichtung. Durch den beim Erntebetrieb eingeschränkten Bewegungsbereich der Austrageinrichtung vermeidet man, dass ein Bediener das Abgabeende der Austrageinrichtung versehentlich in eine ungeeignete, zu tiefe Position verbringt.

Die Erfindung eignet sich für alle Erntemaschinen mit höhenverstellbaren Austrageinrichtungen, wie beispielsweise Feldhäcksler und Zuckerrohrernter.

Der Aktor ist in der Regel ein Hydraulikzylinder, der zwischen der Austrageinrichtung und einem Drehkranz bzw. einem mit dem Drehkranz verbundenen Element angelenkt ist. Der Drehkranz kann durch einen anderen Aktor um eine vertikale oder ungefähr vertikale Achse rotiert werden. Die Kolbenstange des Zylinders des Aktors ist an einer Achse angelenkt, die mit der Austrageinrichtung verbunden ist, während der Zylinder am Drehkranz angelenkt ist. Denkbar wäre auch eine vertauschte Anordnung, bei der der Zylinder an der Austrageinrichtung und die Kolbenstange am Drehkranz angelenkt ist. Es bietet sich an, das Anschlagelement in der aktiven Stellung zwischen der Achse und dem Zylinder anzubringen, um den Bewegungsbereich des Aktors und somit der Austrageinrichtung zu begrenzen. In der inaktiven Stellung wird es aus dieser Position entfernt, was von Hand oder durch einen fremdkraftbetätigten Aktor erfolgen kann.

Vorzugsweise ist das Anschlagelement drehbar an der Achse gelagert. In anderen Ausführungsformen ist aber auch ein abnehmbares oder zwischen der aktiven und inaktiven Stellung verschiebbares Anschlagelement denkbar.

Das Anschlagelement ist vorzugsweise in die aktive Stellung vorgespannt, beispielsweise durch eine Feder. Solange keine weiteren Kräfte oder Momente wirken, bleibt es somit aktiv.

Außerdem bietet es sich an, das Anschlagelement in der inaktiven Stellung festhaltbar zu gestalten, damit es zumindest so lange in dieser Stellung verbleibt, bis es wieder in die aktive Stellung zurückkehren soll. Dazu kann ein gegenüber dem Anschlagelement bewegliches Verstellelement vorgesehen sein, das zwischen einer eingefahrenen und ausgefahrenen Stellung beweglich ist und in der ausgefahrenen Stellung am Zylinder des Aktors anliegt. Dadurch wird es möglich, den Aktor in eine Stellung zu bringen, in der sich die Austrageinrichtung oberhalb der erwähnten tiefsten Stellung befindet, das (nunmehr nicht durch den an ihm anliegenden Zylinder festgehaltene) Anschlagelement in die inaktive Stellung zu verbringen und das Verstellelement auszufahren, so dass es am Zylinder anliegt und das Anschlagelement in der inaktiven Stellung hält. Der Aktor kann nunmehr die Austrageinrichtung bis in die Verladeposition absenken. Die beschriebenen Bewegungen des Anschlagelements und des Verstellelements können manuell oder durch geeignete fremdkraftbetätigte Aktoren bewerkstelligt werden.

Wird die Austrageinrichtung anschließend zur Aufnahme des Erntebetriebs wieder angehoben und dazu die Kolbenstange ausgefahren, gleitet das Verstellelement und anfangs auch das Anschlagelement am Zylinder entlang. Beim Erreichen einer bestimmten Höhe wird das Anschlagelement durch die Vorspannung wieder in die aktive Stellung verbracht. Das Verstellelement gelangt wieder in die eingefahrene Stellung, sobald die Austrageinrichtung danach abgesenkt wird.

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung und
- Fig. 2: eine vergrößerte Seitenansicht der Schwenklagerung der Austrageinrichtung und des zugehörigen Aktors, der eingerichtet ist, die Austrageinrichtung zur Höhenverstellung ihres Abgabeendes um eine horizontale Achse zu verstellen,
- Fig. 3: eine von der rechten Seite aus betrachtete perspektivische Ansicht einer Anordnung zur Begrenzung des Bewegungsbereich des Aktors in aktiver Stellung,
- Fig. 4: eine von der linken Seite aus betrachtete perspektivische Ansicht der Anordnung zur Begrenzung des Bewegungsbereich des Aktors in aktiver Stellung,
- Fig. 5: eine perspektivische Ansicht eines Anschlagelements der Anordnung zur Begrenzung des Bewegungsbereichs des Aktors,
- Fig. 6: eine perspektivische Ansicht eines Verstellelements der Anordnung zur Begrenzung des Bewegungsbereichs des Aktors,
- Fig. 7: eine perspektivische Ansicht eines Distanzstücks der Anordnung zur Begrenzung des Bewegungsbereichs des Aktors,
- Fig. 8: eine seitliche Ansicht der Austrageinrichtung und des Aktors bei einer in ihre inaktive Stellung verbrachten Vorrichtung zur Begrenzung des Bewegungsbereichs des Aktors, wobei der Aktor gegenüber der in Figur 3 und 4 dargestellten Stellung geringfügig angehoben ist, und
- Fig. 9: eine seitliche Ansicht der Austrageinrichtung und des Aktors bei einer in ihre inaktive Stellung verbrachten Vorrichtung zur Begrenzung des Bewegungsbereichs des Aktors, wobei der Aktor in seine weitest möglich eingefahrene Verladeposition verbracht ist.

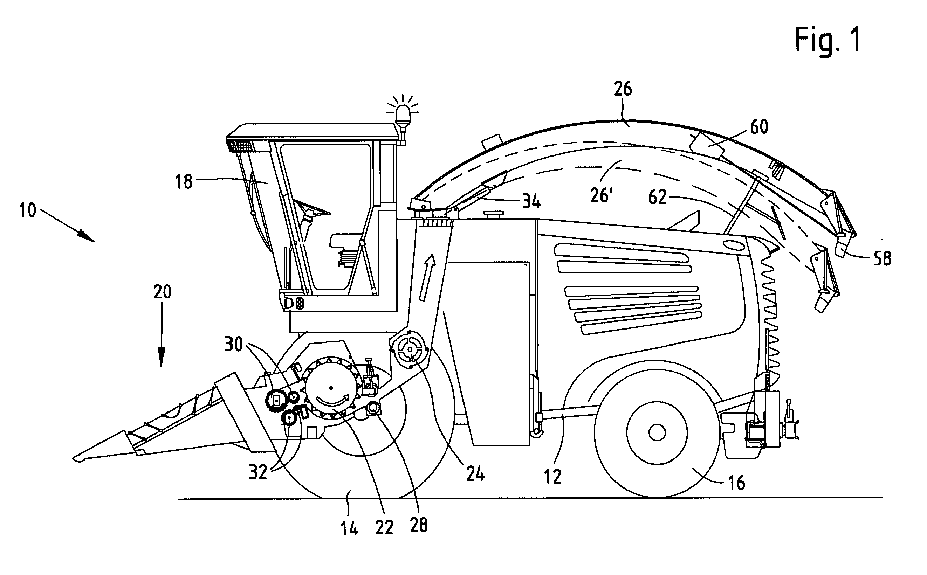

Eine in der Figur 1 gezeigte Erntemaschine 10 in der Art eines selbstfahrenden Feldhäckslers baut sich auf einem Rahmen 12 auf, der von angetriebenen vorderen Rädern 14 und lenkbaren rückwärtigen Rädern 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20, die in der dargestellten Ausführungsform ein Maisgebiss ist, vom Boden aufgenommenes Gut, z. B. Mais, Gras oder dergleichen, wird durch obere Vorpresswalzen 30 und untere Vorpresswalzen 32 einer Häckseltrommel 22 zugeführt, die es in kleine Stücke häckselt und es einer Fördervorrichtung 24 aufgibt. Das Gut verlässt die Erntemaschine 10 zu einem nebenherfahrenden Anhänger über eine drehbare Austrageinrichtung 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Die Austrageinrichtung 26 hat den Querschnitt eines umgekehrten U, ist daher im Wesentlichen nach unten geöffnet, da das Erntegut durch die Zentrifugalkraft an der Oberseite des Deckblechs der Austrageinrichtung 26 entlang gleitet und durch die Seitenbleche der Austrageinrichtung 26 in seitlicher Richtung geführt wird.

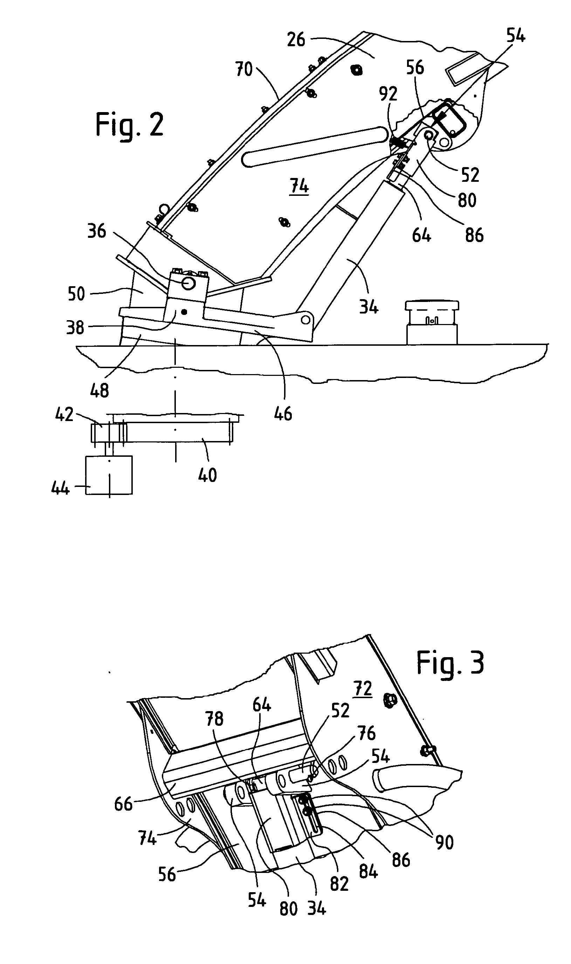

Anhand der Figuren 1 und 2 ist erkennbar, dass die Austrageinrichtung 26 an ihrem unteren Ende durch einen Aktor 34 um eine (je nach Drehposition der Auswurfeinrichtung 26 um die Hochachse mehr oder weniger) horizontale Achse 36 verschwenkbar ist. Eine um die Achse 36 drehbare Lagerung erstreckt sich jeweils zwischen einer der beiden unteren Seitenwandbereiche der Austrageinrichtung 26 und einer Halterung 38. Die Halterung 38 ist ihrerseits durch ein Rohr 48 an einem Drehkranz 40 befestigt, der gegenüber dem Rahmen 12 drehbar gelagert und an seinem Umfang mit Zähnen versehen ist. Mit den Zähnen des Drehkranzes 40 kämmt ein Zahnrad 42, das durch einen hydraulisch oder elektrisch betriebenen Motor 44 in Drehung versetzbar ist. Dadurch kann der Drehkranz 40 und mit ihm die Austrageinrichtung 26 um eine fast vertikale, jedoch leicht entgegen der Fahrtrichtung der Erntemaschine 10 nach hinten geneigte Drehachse gedreht werden.

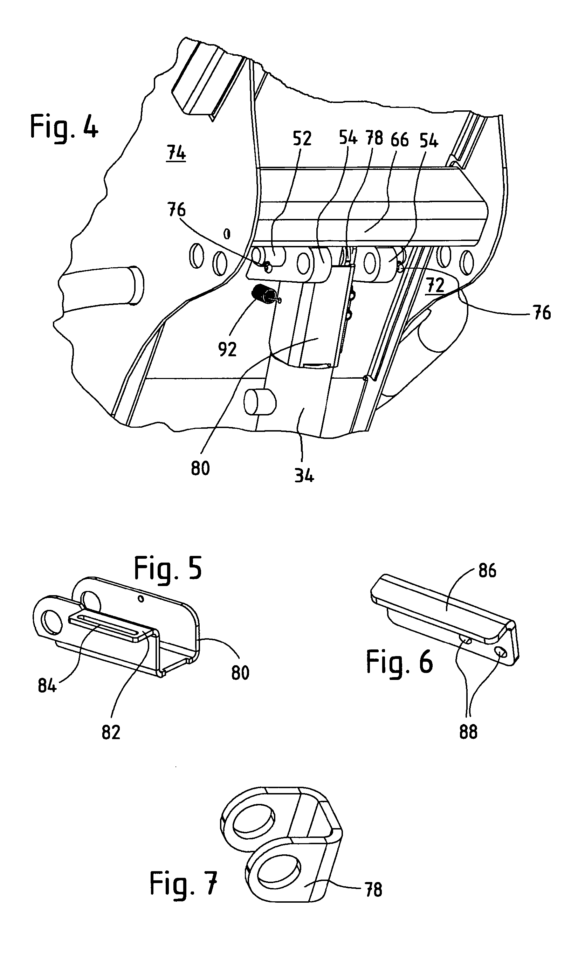

Das Rohr 48 ist mit der Halterung 36 durch einen Flansch 46 verbunden, an dem auch das untere, kolbenraumseitige Ende des Zylinders des als Hydraulikzylinder ausgeführten Aktors 34 angelenkt ist. Die Kolbenstange 64 des Aktors 34 ist durch eine Achse 52 an einer gabelförmigen Konsole 54 (s. Figur 3 und 4) angelenkt, die ihrerseits an einem Bodenblech 56 der Austrageinrichtung 26 angebracht ist. Innerhalb des mit dem Drehkranz 40 rotierenden Rohrs 48 erstreckt sich ein rahmenfestes Rohr 50, das vom Auslass der Fördervorrichtung 24 nach oben verläuft und das Erntegut oberhalb der Halterung 38 in die Austrageinrichtung 26 abgibt. Weiterhin ist am abgabeseitigen Ende der Austrageinrichtung 26 eine schwenkbare Auswurfklappe 58 angelenkt, deren Position durch einen Aktor 60 veränderbar ist.

Die Aktoren 34, 44 und 60 ermöglichen somit eine Verstellung der Position der Auswurfeinrichtung 26, um das Erntegut auf einem Transportfahrzeug ablegen zu können. Der Aktor 44 dreht die Auswurfeinrichtung 26 um eine etwa vertikal verlaufende Achse, während der Aktor 34 durch Verschwenken um die horizontale Achse 36 die Höhe des Auswurfendes vorgibt. Der Aktor 34 ist ein einfach wirkender Zylinder, er könnte in einer anderen Ausführungsform aber auch doppelt wirkend sein. Die Ansteuerung der Aktoren 34, 44 und 60 kann über geeignete Eingabemittel durch einen Bediener in der Fahrerkabine 18 erfolgen. Es besteht auch die Möglichkeit, vorprogrammierte Positionen anzusteuern oder die Austrageinrichtung 26 durch geeignete Sensoren selbsttätig auszurichten, so dass das Erntegut auf das Transportfahrzeug gelangt. In der in Figur 1 dargestellten Stellung ruht die Austrageinrichtung 26 endseitig auf einer Ablageeinrichtung 62 am rückwärtigen Ende der Erntemaschine 10, bei der es sich um ein aus Rohren zusammengesetztes Gestell handelt, das einem Führungsholm eines Rasenmähers ähnelt. Diese Stellung kann zur Fahrt auf einem Feld verwendet werden, falls gerade nicht geerntet wird, und zur Fahrt auf einer Straße. Die Auswurfeinrichtung 26 ist in dieser Stellung jedoch zu hoch, um die Erntemaschine 10 auf einem Lastwagen, Anhänger, Eisenbahnwaggon, Schiff o. ä. zu transportieren.

Die Anbringung der Kolbenstange 64 des Aktors 34 am Bodenblech 56 über die gabelförmige Konsole 54 ist anhand der Figuren 3 und 4 erkennbar. Das Bodenblech 56 erstreckt sich im Abstand vom Deckblech 70 der Austrageinrichtung 26 und parallel dazu, so dass das Erntegut zwischen dem Bodenblech 56 und dem Deckblech 70 hindurch geleitet wird. Das Bodenblech 56 ist mit den Seitenwänden 72, 74 der Austrageinrichtung 26 verschweißt. Eine sich zwischen den Seitenwänden 72, 74 erstreckende Versteifungsstrebe 66 ist ebenfalls mit dem Bodenblech 56 verschweißt. Die gabelförmige Konsole 54 ist am Bodenblech 56 angeschweißt. Ihre Schenkel der Konsole 54 sind mit jeweils einer Öffnung versehen, durch die sich die Achse 52 erstreckt, die auch durch eine Bohrung am oberen Ende der Kolbenstange 64 verläuft. Die Achse 52 ist durch zwei Splinte 76, die sich außerhalb der Schenkel der Konsole 54 durch Bohrungen in der Achse 52 erstrecken, in ihrer Position fixiert. Zwischen den Schenkeln der gabelförmigen Konsole 54 und der Kolbenstange 64 befindet sich jeweils noch ein gelochter Schenkel eines U-förmigen Distanzstücks 78, dessen Bodenteil am Bodenblech 56 anliegt. Das Distanzstück 78 ist in der Figur 7 dargestellt.

Weiterhin sind jeweils zwischen den Schenkeln der Konsole 54 und den Schenkeln des Distanzstücks 78 die Schenkel eines in der Figur 5 wiedergegebenen Anschlagelements 80. Das Anschlagelement 80 hat ein U-förmiges Profil, wobei im endseitigen Bereich der Schenkel Öffnungen angeordnet sind, durch die sich die Achse 52 erstreckt. Bei anderer Dimensionierung der Konsole 56 und des Anschlagelements 80 könnte das Distanzstück 78 auch entfallen.

Die Länge des Anschlagelements 80 ist derart bemessen, dass der obere Rand des Zylinders des Aktors 34 am Anschlagelement 80 anliegt, wenn die Austrageinrichtung 26 sich in der in der Figur 1 eingezeichneten Stellung befindet, d. h. auf der Ablageeinrichtung 62 aufliegt und das Anschlagelement 80 am Bodenblech 56 anliegt. Die Austrageinrichtung 26 stützt sich dann nicht über die Kolbenstange 64 des Aktors 34, sondern über das Anschlagelement 80 und den Zylinder des Aktors 34 am Flansch 46 ab. Ist der Aktor 34 doppelt wirkend, sind geeignete Maßnahmen zu treffen, dass die Kolbenstange 64 nicht weiter eingefahren wird als hier dargestellt.

Der in Figur 3 rechts eingezeichnete, erste Schenkel des Anschlagelements 80 ist mit einem nach außen abgewinkelten Bereich 82 versehen, in dem ein Langloch 84 angeordnet ist. Ein Verstellelement 86 mit rechtwinkelförmigem Querschnitt liegt plan am abgewinkelten Bereich 82 an und umrundet die Kante zwischen dem ersten Schenkel und dem Bereich 82. Das Verstellelement 86 und der Bereich 82 erstrecken sich in der in Figur 3 dargestellten Stellung parallel zum Bodenblech 56, wobei das Verstellelement 86 an Letzterem anliegt. Das Verstellelement 86 ist mit zwei Bohrungen 88 versehen, durch die sich Schrauben 90 erstrecken, die beide weiterhin das Langloch 84 im Anschlagelement 80 durchdringen und an der vom Verstellelement 86 abgewandten Seite durch Muttern gesichert sind. Die beschriebene Anbringung ermöglicht es, das Verstellelement 86 in Längsrichtung des Langlochs 84 gegenüber dem Anschlagelement 80 zu verschieben, so dass es (bezüglich der Figur 3) nach unten ausgefahren werden kann. Das Verstellelement 86 könnte auch schwenkbar am Anschlagelement 86 angelenkt sein, insbesondere um die Längsachse einer der Schrauben 90. Eine spiralförmige Feder 92 erstreckt sich zwischen dem zweiten Schenkel des Anschlagelements 80 und dem Bodenblech 56 und spannt das Anschlagelement 80 in die in den Figuren 3 und 4 dargestellte Stellung vor.

Die Schrauben 90 halten das Verstellelement 86 in der in den Figuren 3 und 4 dargestellten, eingefahrenen Position und die Feder 92 hält das Anschlagelement 80 gegen das Bodenblech 56. Die Austrageinrichtung 26 kann durch Betätigen des Aktors 34 in beliebige Positionen nach oben angehoben werden. Der Verstellbereich des Aktors 34 nach unten ist jedoch durch das Anschlagelement 80 begrenzt, solange es durch die Feder 92 gegen das Bodenblech 56 gedrückt wird. In den Positionen gemäß der Figuren 3 und 4 kann die Austrageinrichtung 26 somit in die beim Erntebetrieb benötigten Positionen verbracht werden, da dabei eine tiefere Einstellung, als sie in der Figur 1 gezeigt ist, nicht benötigt wird.

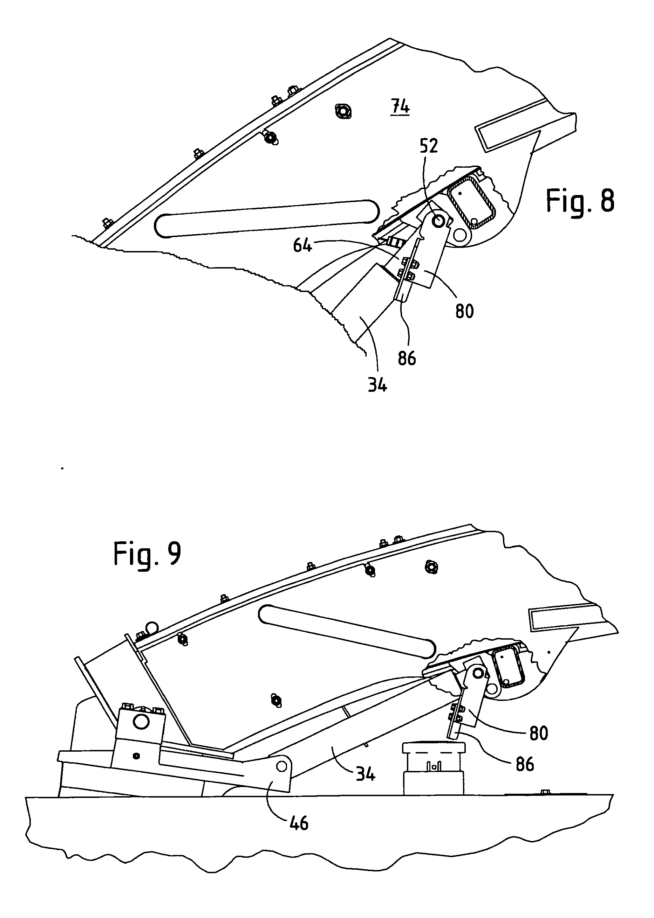

Wird die Austrageinrichtung 26 aus der in den Figuren 1, 3 und 4 gezeigten Position geringfügig angehoben, so dass der Zylinder des Aktors 34 nicht mehr am Anschlagelement 80 anliegt, kann das Anschlagelement 80 gegen die Kraft der Feder 92 von Hand um die Achse 52 nach unten, d. h. vom Bodenblech 56 fort, verschwenkt werden. Dann kann auch das Verstellelement 86 von Hand ausgefahren werden. Diese Stellung ist in der Figur 8 wiedergegeben. Das Verstellelement 86 wird durch die Wirkung der Feder 92 gegen den oberen Rand des Zylinders des Aktors 34 gezogen. Das Anschlagelement 80 befindet sich nunmehr nicht mehr in seiner aktiven Stellung zwischen dem Zylinder des Aktors 34 und der Achse 52, sondern in einer inaktiven Stellung, so dass der Aktor 34 noch unter die in den Figuren 1, 3 und 4 dargestellte Stellung eingefahren werden kann, wie in der Figur 9 dargestellt. In dieser Position kann die Austrageinrichtung 26 links oder rechts unmittelbar seitlich neben der Ablageeinrichtung 62 positioniert werden. Diese Stellung eignet sich besonders zum Transport der Erntemaschine auf einem Lastwagen, Anhänger, Eisenbahnwagen usw., bei dem nur eine eingeschränkte Höhe zur Verfügung steht. In der Figur 1 ist die gestrichelt eingezeichnete Austrageinrichtung 26' in der Verladeposition.

Vor einer Verladung der Erntemaschine 10 stellt der Bediener den Aktor 34 somit in die Position gemäß Figur 8. Dazu kann eine Automatik vorgesehen sein, die diese Position auf eine entsprechende Eingabe oder die Betätigung eines geeigneten Schalters hin anfährt. Der Bediener verlässt die Fahrerkabine 18 und begibt sich zur unmittelbar dahinter angeordneten Austrageinrichtung 26, verschwenkt das Anschlagelement 80 und verstellt das Verstellelement 86. Anschließend kann er in die Fahrerkabine 18 zurückkehren und das Verbringen der Austrageinrichtung 26 in die abgesenkte Verladeposition neben der Ablageeinrichtung 62 veranlassen. Die Erntemaschine 10 kann nunmehr problemlos verladen werden.

Wird die Austrageinrichtung 26 anschließend zur Ernte durch Ausstrecken des Aktors 34 wieder angehoben, zieht die Feder 92 das Anschlagelement 80 gegen das Bodenblech 56 in die Stellung gemäß Figur 3 und 4, sobald der Zylinder des Aktors 34 nicht mehr am Verstellelement 86 und/oder am Anschlagelement 80 anliegt; das Anschlagelement 80 gelangt in seine aktive Stellung. Bei einem nachfolgende Absenken der Austrageinrichtung 26 durch Einziehen des Aktors 34 schiebt das Gewicht der Austrageinrichtung 26 das Verstellelement 86 in seine eingefahrene Stellung, sobald es am Rand des Zylinders des Aktors 34 zum Anliegen kommt. Die Stellung gemäß Figur 3 und 4 wird somit ohne manuelles Zutun erreicht.

## Patentansprüche

1. Erntemaschine (10) mit einer Austrageinrichtung (26) zur Überladung von Erntegut auf ein Transportfahrzeug, mit einem zur Bewegung der Austrageinrichtung (26) um eine zumindest im Wesentlichen horizontale Achse (36) eingerichteten Aktor (34), durch den die Höhe des Abgabeendes der Austrageinrichtung (26) veränderbar ist, **gekennzeichnet durch** ein Anschlagelement (80), das zwischen einer aktiven Stellung und einer inaktiven Stellung bewegbar ist, wobei es in der aktiven Stellung den Bewegungsbereich des Aktors (34) in einer Weise begrenzt, dass die Austrageinrichtung (26) **durch** den Aktor (34) nicht tiefer als in eine tiefste Stellung verbringbar ist, und in der inaktiven Stellung den Bewegungsbereich des Aktors (34) nach unten nicht begrenzt, so dass die Austrageinrichtung (26) **durch** den Aktor (34) tiefer als in die tiefste Stellung verbringbar ist.

2. Erntemaschine (10) nach Anspruch 1, **dadurch gekennzeichnet, dass** die Austrageinrichtung (26) in eine Verladeposition zum Transport auf einem Lastwagen, Anhänger o. dgl. verbringbar ist, in der sie unterhalb der tiefsten Stellung liegt, so dass das Anschlagelement (80) in die inaktive Stellung zu verbringen ist, damit die Austrageinrichtung (26) in die Verladeposition verbringbar ist.

3. Erntemaschine (10) nach Anspruch 2, **dadurch gekennzeichnet, dass** die Austrageinrichtung (26) sich in der Verladeposition seitlich neben einer Ablageeinrichtung (62) an der Rückseite der Erntemaschine (10) befindet und in vertikaler Richtung betrachtet unterhalb der Ablagefläche der Ablageeinrichtung (62) für die Austrageinrichtung (26).

4. Erntemaschine (10) nach einem der Ansprüche 1 bis 3, **dadurch gekennzeichnet, dass** sich die Austrageinrichtung (26) beim Erntebetrieb oberhalb der tiefsten Stellung befindet, so dass das Anschlagelement (80) beim Erntebetrieb in die aktive Stellung bringbar ist.

5. Erntemaschine (10) nach einem der Ansprüche 1 bis 4, **dadurch gekennzeichnet, dass** das Anschlagelement (80) sich in der aktiven Stellung zwischen einem Zylinder des Aktors (34) und einer Achse (52) befindet, an der eine Kolbenstange (64) des Zylinders angelenkt ist, und in der inaktiven Stellung nicht zwischen dem Zylinder des Aktors (34) und der Achse (52) angeordnet ist.

6. Erntemaschine (10) nach Anspruch 5, **dadurch gekennzeichnet, dass** das Anschlagelement (80) um die Achse (52) schwenkbar gelagert ist.

7. Erntemaschine (10) nach einem der Ansprüche 1 bis 6, **dadurch gekennzeichnet, dass** das Anschlagelement (80) in die aktive Stellung vorgespannt ist.

8. Erntemaschine (10) nach einem der Ansprüche 1 bis 7, **dadurch gekennzeichnet, dass** das Anschlagelement (80) in der inaktiven Stellung festhaltbar ist.

9. Erntemaschine (10) nach Anspruch 8, **dadurch gekennzeichnet, dass** am Anschlagelement (80) ein bewegliches Verstellelement (86) angebracht ist, das zwischen einer eingefahrenen und einer ausgefahrenen Stellung beweglich ist, und dass das Anschlagelement (80) durch das ausgefahrene Verstellelement (86) in der inaktiven Stellung festhaltbar ist.

10. Erntemaschine (10) nach Ansprüchen 5 und 9, **dadurch gekennzeichnet, dass** das Anschlagelement (80) bei einer gegenüber der tiefsten Stellung in einem begrenzten Maß angehobenen Austrageinrichtung (26) in die inaktive Stellung verbringbar ist, wobei dann das Verstellelement (86) in ausgefahrener Stellung zur Anlage an den Zylinder des Aktors (34) gelangt.

11. Erntemaschine (10) nach einem der Ansprüche 8 bis 10, **dadurch gekennzeichnet, dass** das Anschlagelement (80) durch Ausfahren des Aktors (34) aus der inaktiven Stellung in die aktive Stellung verbringbar ist.

12. Erntemaschine (10) nach Anspruch 9 oder 10 oder 9 plus 11, **dadurch gekennzeichnet, dass** das Verstellelement (86) durch Einziehen des Aktors (34) aus der ausgefahrenen Stellung in die eingefahrene Stellung verbringbar ist.

## Claims

1. Harvesting machine (10) with a discharging device (26) for transferring harvested crop to a transport vehicle, with an actuator (34) which is provided for moving the discharging device (26) about an at least substantially horizontal axis (36) and by means of which the height of the output end of the discharging device (26) can be changed, **characterized by** a stop element (80) which is movable between an active position and an inactive position, with it, in the active position, restricting the range of movement of the actuator (34) in such a manner that the discharging device (26) cannot be brought by the actuator (34) lower than into a lowermost position, and, in the inactive position, not restricting the range of movement of the actuator (34) downwards, and therefore the discharging device (26) can be brought by the actuator (34) lower than into the lowermost position.

2. Harvesting machine (10) according to Claim 1, **characterized in that** the discharging device (26) can be brought into a transporting position for transportation on a lorry, trailer or the like, in which transporting position it lies below the lowermost position such that the stop element (80) has to be brought into the inactive position so that the discharging device (26) can be brought into the transporting position.

3. Harvesting machine (10) according to Claim 2, **characterized in that**, in the transporting position, the discharging device (26) is located laterally next to a depositing device (62) on the rear side of the harvesting machine (10) and, as viewed in the vertical direction, is located below the depositing surface of the depositing device (62) for the discharging device (26).

4. Harvesting machine (10) according to one of Claims 1 to 3, **characterized in that**, in the harvesting mode, the discharging device (26) is located above the lowermost position such that, during the harvesting mode, the stop element (80) can be brought into the active position.

5. Harvesting machine (10) according to one of Claims 1 to 4, **characterized in that**, in the active position, the stop element (80) is located between a cylinder of the actuator (34) and a spindle (52) to which a piston rod (64) of the cylinder is coupled, and, in the inactive position, is not arranged between the cylinder of the actuator (34) and the spindle (52).

6. Harvesting machine (10) according to Claim 5, **characterized in that** the stop element (80) is mounted pivotably about the spindle (52).

7. Harvesting machine (10) according to one of Claims 1 to 6, **characterized in that** the stop element (80) is prestressed into the active position.

8. Harvesting machine (10) according to one of Claims 1 to 7, **characterized in that** the stop element (80) can be secured in the inactive position.

9. Harvesting machine (10) according to Claim 8, **characterized in that** a movable adjustment element (86) which is movable between a retracted and an extended position is fitted to the stop element (80), and **in that**, in the inactive position, the stop element (80) can be secured by the extended adjustment element (86).

10. Harvesting machine (10) according to Claims 5 and 9, **characterized in that** the stop element (80) can be brought into the inactive position when a discharging device (26) is raised to a limited extent in relation to the lowermost position, with the adjustment element (86) in the extending position then coming to bear against the cylinder of the actuator (34).

11. Harvesting machine (10) according to one of Claims 8 to 10, **characterized in that** the stop element (80) can be brought from the inactive position into the active position by extension of the actuator (34).

12. Harvesting machine (10) according to Claim 9 or 10 or 9 plus 11, **characterized in that** the adjustment element (86) can be brought from the extended position into the retracted position by retraction of the actuator (34).

## Revendications

1. Machine de récolte (10) avec un dispositif de décharge (26) pour le transfert de produits de récolte sur un véhicule de transport, comprenant un actionneur (34) pour le déplacement du dispositif de décharge (26) autour d'un axe au moins essentiellement horizontal (36), qui permet de modifier la hauteur de l'extrémité de décharge du dispositif de décharge (26), **caractérisée par** un élément de butée (80) qui peut être déplacé entre une position active et une position inactive, qui limite la plage de déplacement de l'actionneur (34) dans la position active de telle sorte que le dispositif de décharge (26) ne puisse pas être amené par l'actionneur (34) plus bas qu'une position minimale, et qui ne limite pas la plage de déplacement de l'actionneur (34) vers le bas dans la position inactive, de sorte que le dispositif de décharge (26) puisse être amené par l'actionneur (34) dans une position plus basse que la position minimale.

2. Machine de récolte (10) selon la revendication 1, **caractérisée en ce que** le dispositif de décharge (26) peut être amené dans une position de chargement pour le transport sur un véhicule poids lourd, une remorque ou similaire, dans laquelle il se trouve en dessous de la position minimale, de sorte que l'élément de butée (80) doive être amené dans la position inactive afin que le dispositif de décharge (26) puisse être amené dans la position de chargement.

3. Machine de récolte (10) selon la revendication 2, **caractérisée en ce que** le dispositif de décharge (26) se trouve dans la position de chargement, latéralement à côté d'un dispositif de dépose (62) du côté arrière de la machine de récolte (10) et, vu dans la direction verticale, se trouve en dessous de la surface de dépose du dispositif de dépose (62) pour le dispositif de décharge (26).

4. Machine de récolte (10) selon l'une quelconque des revendications 1 à 3, **caractérisée en ce que** le dispositif de décharge (26), lors de la récolte, se trouve au dessus de la position minimale, de sorte que l'élément de butée (80) puisse être amené dans la position active lors de la récolte.

5. Machine de récolte (10) selon l'une quelconque des revendications 1 à 4, **caractérisée en ce que** l'élément de butée (80) se trouve dans la position active entre un cylindre de l'actionneur (34) et un axe (52), sur lequel est articulée une tige de piston (64) du cylindre, et n'est pas disposé dans la position inactive entre le cylindre de l'actionneur (34) et l'axe (52).

6. Machine de récolte (10) selon la revendication 5, **caractérisée en ce que** l'élément de butée (80) est monté de manière à pouvoir pivoter autour de l'axe (52).

7. Machine de récolte (10) selon l'une quelconque des revendications 1 à 6, **caractérisée en ce que** l'élément de butée (80) est précontraint dans la position active.

8. Machine de récolte (10) selon l'une quelconque des revendications 1 à 7, **caractérisée en ce que** l'élément de butée (80) peut être fixé dans la position inactive.

9. Machine de récolte (10) selon la revendication 8, **caractérisée en ce que** l'on monte sur l'élément de butée (80) un élément de réglage mobile (86), qui est déplaçable entre une position rentrée et une position sortie, et **en ce que** l'élément de butée (80) peut être fixé dans la position inactive par l'élément de réglage sorti (86).

10. Machine de récolte (10) selon les revendications 5 et 9, **caractérisée en ce que** l'élément de butée (80) peut être amené dans la position inactive lorsque le dispositif de décharge (26) est soulevé par rapport à la position minimale dans une mesure limitée, l'élément de réglage (86) arrivant alors dans la position sortie pour venir en appui contre le cylindre de l'actionneur (34).

11. Machine de récolte (10) selon l'une quelconque des revendications 8 à 10, **caractérisée en ce que** l'élément de butée (80) peut être amené de la position inactive dans la position active en sortant l'actionneur (34).

12. Machine de récolte (10) selon la revendication 9 ou 10, ou 9 et 11, **caractérisée en ce que** l'élément de réglage (86) peut être amené de la position sortie dans la position rentrée en rentrant l'actionneur (34).
